# EUROPEAN PATENT APPLICATION

(11) **EP 4 527 911 A1**
(43) Date of publication of application: **26.03.2025**
(21) Application number: 23807568.3
(22) Date of filing: 12.05.2023
(51) Int. Cl.: C10M 137/04, C10N 20/02, C10N 30/06, C10N 30/12, C10N 40/00, C10N 40/04

(54) **LUBRICATING OIL COMPOSITION**

(30) Priority: 16.05.2022 JP 2022079954
(71) Applicant: Idemitsu Kosan Co.,Ltd., Tokyo 100-8321 (JP)
(72) Inventor: MATSUBARA, Kazushige, Tokyo 100-8321 (JP)
(74) Representative: Vossius & Partner Patentanwälte Rechtsanwälte mbB
(86) International application number: PCT/JP2023/017923
(87) International publication number: WO 2023/223965

(57) **Abstract**

There has been a need for a novel lubricating oil composition which has characteristics (for example, scuffing resistance and copper corrosion resistance) that are suitable for lubrication of various mechanisms that are incorporated in a device. The present invention provides a lubricating oil composition which contains (A) a base oil and (B) a phosphite ester that has at least one sulfur atom-containing group having 2 to 20 carbon atoms, the group having at least one -(S) x- group (wherein x is an integer of 1 or more) between two adjacent carbon atoms in the structure of an alkyl group, wherein: the content of a thiadiazole compound is less than 0.05% by mass based on the total amount of the lubricating oil composition; and the kinematic viscosity of the lubricating oil composition at 100°C is 4.2 mm²/s or more.

## Description

### Technical Field

The present invention relates to a lubricating oil composition, an electrically driven unit, use of a lubricating oil composition, and a method for producing a lubricating oil composition.

### Background Art

Various apparatuses such as an engine, a transmission, a speed reducer, a compressor and a hydraulic system have mechanisms such as a torque converter, a clutch, a gear bearing mechanism, an oil pump and a hydraulic control mechanism. In these mechanisms, lubricating oil compositions are used, and lubricating oil compositions capable of meeting various requirements have been developed.

For example, in Patent Literature 1, a lubricating oil composition for a transmission, which contains a prescribed base oil and a prescribed amount of poly(meth)acrylate and satisfies a prescribed parameter, is disclosed for the purpose of providing a lubricating oil composition for a transmission, which is enhanced in high-temperature stability and shear stability and is capable of suppressing decrease in low-temperature flowability occurring with long-term use.

Furthermore, development of an electrically driven unit including a motor, a gearbox, and an inverter has been advanced in recent years, and a lubricating oil composition suitable for this electrically driven unit has been desired. For example, in Patent Literature 2, a lubricating oil composition which contains a prescribed phosphorous acid ester and a thiadiazole derivative and is preferred for an electrically driven unit is disclosed for the purpose of providing a lubricating oil composition having high extreme pressure properties, exhibiting durability and abrasion resistance in a high dimension, and showing a high volume specific resistivity.

### Citation List

### Patent Literature

Patent Literature 1: International Publication No. WO 2020/213644
Patent Literature 2: International Publication No. WO 2021/193869

### Summary of Invention

### Technical Problem

The above-mentioned lubricating oil composition used for an electrically driven unit requires characteristics of scuffing resistance, copper corrosion resistance, etc. That is to say, a novel lubricating oil composition having characteristics (e.g., scuffing resistance, copper corrosion resistance) suitable for lubrication of various mechanisms incorporated in apparatuses has been desired.

### Solution to Problem

The present inventors have found that by setting a kinematic viscosity of a lubricating oil composition in a prescribed range and incorporating a prescribed phosphorous acid ester, a lubricating oil composition, which exhibits excellent copper corrosion resistance even in a copper corrosion test for a long time (for example, 168 hours in Example described later) without being decreased in scuffing resistance even if a thiadiazole compound is not used, can be provided. The present invention has been completed based on the above findings.

That is to say, the present invention provides the following embodiments [1] to [9].
[1] A lubricating oil composition comprising a base oil (A) and a phosphorous acid ester (B) having at least one sulfur atom-containing group having 2 to 20 carbon atoms, the sulfur atom-containing group having at least one - (S)ₓ- group (x is an integer of 1 or more) between two adjacent carbon atoms in a structure of an alkyl group, wherein
   a content of a thiadiazole compound is less than 0.05 mass% based on the total amount of the lubricating oil composition, and
   a kinematic viscosity of the lubricating oil composition at 100°C is 4.2 mm²/s or more.
[2] The lubricating oil composition according to [1], wherein the phosphorous acid ester compound (B) comprises at least one selected from a compound (B1) represented by the following general formula (b-1) and a compound (B2) represented by the following general formula (b-2): 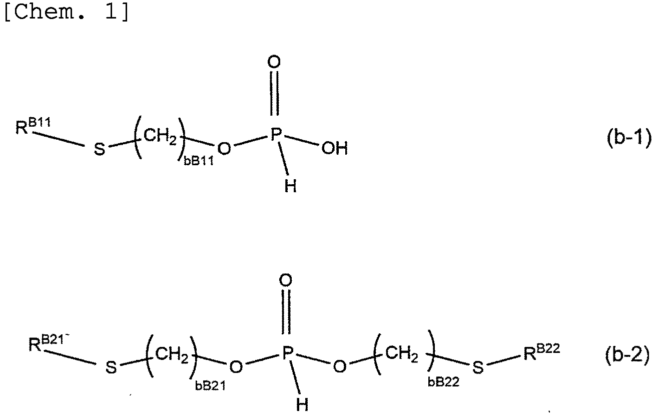 wherein R^{B11}, R^{B21}, and R^{B22} each independently represent an alkyl group having 1 to 19 carbon atoms, and bB11, bB21, and bB22 each independently represent an integer of 1 to 10.
[3] The lubricating oil composition according to [1] or [2], wherein a content of a benzotriazole compound is less than 0.05 mass% based on the total amount of the lubricating oil composition.
[4] The lubricating oil composition according to any one of [1] to [3], wherein a content of the phosphorous acid ester compound (B) is 0.15 mass% or more and less than 1.00 mass% based on the total amount of the lubricating oil composition.
[5] The lubricating oil composition according to any one of [1] to [4], wherein the base oil (A) is one or more selected from the group consisting of mineral oil, poly-α-olefin, isoparaffin, polyalkylene glycol, an ester-based synthetic oil, an ether-based synthetic oil, an alkylbenzene-based synthetic oil, an alkylnaphthalene-based synthetic oil, GTL, CTL, and BTL.
[6] The lubricating oil composition according to any one of [1] to [5], being used for lubrication of an electrically driven unit comprising at least a gearbox and an electric motor.
[7] An electrically driven unit filled with the lubricating oil composition according to any one of the above [1] to [5], and comprising at least a gearbox and an electric motor.
[8] Use of a lubricating oil composition, wherein the lubricating oil composition according to any one of the above [1] to [5] is applied to lubrication of an electrically driven unit comprising at least a gearbox and an electric motor.
[9] A method for producing the lubricating oil composition according to any one of [1] to [5], comprising
   adding, to a base oil (A), a phosphorous acid ester compound (B) having at least one group having 2 or more and 19 or less carbon atoms wherein one -CH²- group both ends of which are bonded to carbon atoms in an alkyl group having 3 to 20 carbon atoms is replaced by a -S-group, and
   preparing a lubricating oil composition so that a content of a thiadiazole compound is less than 0.05 mass% based on the total amount of the lubricating oil composition, and a kinematic viscosity of the lubricating oil composition at 100°C is 4.2 mm²/s or more.

### Advantageous Effects of Invention

The lubricating oil composition of one preferred embodiment of the present invention is a lubricating oil composition having characteristics suitable for lubrication of various mechanisms incorporated in apparatuses, and the lubricating oil composition of a more specific embodiment of the present invention can be improved in scuffing resistance and copper corrosion resistance in a balanced manner. On that account, these lubricating oil compositions can be preferably used for lubrication of, for example, an electrically driven unit including at least a gearbox and an electric motor.

### Description of Embodiments

Regarding the numerical range described in the present specification, the upper limit and the lower limit can be arbitrarily combined. For example, with the description "preferably 30 to 100, more preferably 40 to 80" as a numerical range, the range of "30 to 80" and the range of "40 to 100" are also included in the numerical range described in the present specification. Alternatively, for example, with the description "preferably 30 or more, more preferably 40 or more, and preferably 100 or less, more preferably 80 or less" as a numerical range, the range of "30 to 80" and the range of "40 to 100" are also included in the numerical range described in the present specification.

In addition, for example, the description of "60 to 100" as the numerical range described in the present specification means a range of "60 or more and 100 or less".

The numerical range of a lower limit to an upper limit can be defined by appropriately selecting values from among respective options and optionally combining them in the definition of the upper limit and the lower limit described in the present specification.

Additionally, multiple requirements among various requirements described as preferred embodiments described in the present specification can be combined.

In the present specification, the kinematic viscosity and the viscosity index mean values measured or calculated in accordance with JIS K2283:2000.

The content of phosphorus atoms (P) means a value measured in accordance with JPI-5S-38-92.

The content of sulfur atoms (S) means a value measured in accordance with JIS K2541-6:2013.

### [Constitution of lubricating oil composition]

The lubricating oil composition of one embodiment of the present invention comprises a base oil (A) (also referred to as a "component (A)" hereinafter) and a phosphorous acid ester (B) (also referred to as a "component (B)" hereinafter); a content of a thiadiazole compound is less than 0.05 mass% based on the total amount of the lubricating oil composition; and a kinematic viscosity of the lubricating oil composition at 100°C is 4.2 mm²/s or more.

The lubricating oil composition of another embodiment of the present invention comprises the component (A) and the component (B); contents of a thiadiazole compound and a benzotriazole compound are each less than 0.05 mass% based on the total amount of the lubricating oil composition; and a kinematic viscosity of the lubricating oil composition at 100°C is 4.2 mm²/s or more.

Since the lubricating oil composition of one embodiment of the present invention contains, together with the base oil (A), the phosphorous acid ester (B) having a prescribed structure, it can become a lubricating oil composition having been improved in scuffing resistance and copper corrosion resistance in a balanced manner even when the contents of the thiadiazole compound (C) and the benzotriazole compound (D) are restricted or these compounds are not substantially contained in the case of a prescribed 100°C kinematic viscosity.

Since the lubricating oil composition of one embodiment of the present invention has such characteristics, it can be preferably used for lubrication of, for example, an electrically driven unit including at least a gearbox and an electric motor.

In the lubricating oil composition of one embodiment of the present invention, the total content of the components (A) and (B) is preferably 50 mass% or more, more preferably 60 mass% or more, more preferably 70 mass% or more, still more preferably 75 mass% or more, still more preferably 80 mass% or more, still much more preferably 85 mass% or more, and particularly preferably 90 mass% or more, and it may be 100 mass% or less, 99.5 mass% or less, 99.0 mass% or less, or 98.0 mass% or less, based on the total amount (100 mass%) of the lubricating oil composition.

Details of the components contained in the lubricating oil composition of one embodiment of the present invention will be described hereinafter.

### <Component (A): base oil>

As the base oil that is the component (A) used in one embodiment of the present invention, one or more selected from mineral oils and synthetic oils can be mentioned.

Examples of the mineral oils include atmospheric residues obtained by subjecting crude oils, such as paraffinic crude oil, intermediate base crude oil, and naphthenic crude oil, to atmospheric distillation; distillates obtained by subjecting these atmospheric residues to vacuum distillation; refined oils obtained by subjecting the distillates to one or more of refining treatments, such as solvent deasphalting, solvent extraction, hydrocracking, solvent dewaxing, catalytic dewaxing, and hydrorefining (hydrocracking); mineral oils (GTL) obtained by isomerizing wax (GTL wax (Gas to Liquids WAX)) produced from natural gas through Fischer-Tropsch process or the like; mineral oils (CTL) obtained by isomerizing wax (CTL wax (Coal To Liquids WAX)) produced from coal through Fischer-Tropsch process or the like; and mineral oils (BTL) obtained by isomerizing wax (BTL wax (Biomass To Liquids WAX)) produced from biomass through Fischer-Tropsch process or the like.

Examples of the synthetic oils include poly-α-olefins, such as an α-olefin homopolymer and an α-olefin copolymer (for example, an α-olefin copolymer having 8 to 14 carbon atoms such as an ethylene-α-olefin copolymer); isoparaffin; polyalkylene glycol; ester-based synthetic oils, such as polyol ester, dibasic acid ester, and phosphoric acid ester; ether-based synthetic oils, such as polyphenyl ether; alkylbenzene-based synthetic oils; and alkylnaphthalene-based synthetic oils.

The lubricating oil composition of one embodiment of the present invention may contain or may not substantially contain a cycloalkane-based synthetic oil, as a base oil.

More specifically, in the lubricating oil composition of one embodiment of the present invention, a content of the cycloalkane-based synthetic oil may be, for example, less than 0.05 mass%, less than 0.03 mass%, less than 0.01 mass%, or less than 0.001 mass%, based on the total amount of the component (A) contained in the lubricating oil composition.

Examples of the cycloalkane-based synthetic oils include naphthenic synthetic oils containing a cyclohexane ring, a cycloheptane ring, a bicycloheptane ring, a bicyclooctane ring, or the like.

The component (A) used in one embodiment of the present invention preferably contains one or more selected from mineral oils classified in Group II and Group III of API (American Petroleum Institute) base oil categories, and synthetic oils.

From the viewpoint of obtaining a lubricating oil composition capable of reducing seizure on a sliding member, the kinematic viscosity of the component (A) used in one embodiment of the present invention at 100°C is preferably 2.5 mm²/s or more, more preferably 2.7 mm²/s or more, still more preferably 2.9 mm²/s or more, and particularly preferably 3.1 mm²/s or more, and from the viewpoint of obtaining a lubricating oil composition having excellent cooling properties, it is preferably 8.0 mm²/s or less, more preferably 7.5 mm²/s or less, still more preferably 7.0 mm²/s or less, still much more preferably 6.5 mm²/s or less, and particularly preferably 6.0 mm²/s or less.

The viscosity index of the component (A) used in one embodiment of the present invention is preferably 70 or more, more preferably 80 or more, still more preferably 90 or more, and particularly preferably 100 or more.

When a mixed oil that is a combination of two or more base oils is used as the component (A) in one embodiment of the present invention, the kinematic viscosity and the viscosity index of the mixed oil are preferably in the above ranges. On that account, by using a low-viscosity base oil and a high-viscosity base oil in combination, the mixed oil may be prepared so as to have a kinematic viscosity and a viscosity index in the above ranges.

In this case, the mixed oil may be a mixed oil of a combination of two or more base oils each having a kinematic viscosity at 100°C and a viscosity index belonging to the aforementioned ranges, or may be a mixed oil of a combination of a base oil having a kinematic viscosity at 100°C and a viscosity index belonging to the aforementioned ranges and a base oil having those not belonging to the aforementioned ranges. Alternatively, the mixed oil may be a mixed oil obtained by combining a low-viscosity base oil having a kinematic viscosity at 100°C and a viscosity index not belonging to the aforementioned ranges and a high-viscosity base oil to adjust them so that they will belong to the aforementioned ranges.

The kinematic viscosity of the component (A) at 100°C and the viscosity index thereof may not belong to the aforementioned ranges as long as the lubricating oil composition has a kinematic viscosity at 100°C and a viscosity index belonging to the ranges described later.

In the lubricating oil composition of one embodiment of the present invention, the content of the component (A) is preferably 30 mass% or more, more preferably 40 mass% or more, more preferably 50 mass% or more, still more preferably 60 mass% or more, still more preferably 70 mass% or more, still much more preferably 80 mass% or more, and particularly preferably 90 mass% or more, and it may be 99.9 mass% or less, 99.5 mass% or less, 99.0 mass% or less, 98.5 mass% or less, or 98.0 mass% or less, based on the total amount (100 mass%) of the lubricating oil composition.

### <Component (B): phosphorous acid ester>

The lubricating oil composition of one embodiment of the present invention contains, as the component (B), a phosphorous acid ester having at least one sulfur atom-containing group having 2 to 20 carbon atoms, the sulfur atom-containing group being obtained by substitution by at least one -(S)ₓ- group (x is an integer of 1 or more, preferably an integer of 1 to 10, more preferably an integer of 1 to 5, still more preferably an integer of 1 to 3, still much more preferably 1 or 2, particularly preferably 1) between two adjacent carbon atoms in a structure of an alkyl group. Since the lubricating oil composition having a prescribed 100°C kinematic viscosity contains the component (B), it can become a lubricating oil composition having been improved in scuffing resistance and copper corrosion resistance.

In one embodiment of the present invention, the component (B) may be used singly, or may be used in combination of two or more. The component (B) may have one sulfur atom-containing group or may have two sulfur atom-containing groups, in the same molecule. The phosphorous acid ester having one sulfur atom-containing group in the same molecule (phosphorous acid monoester) and the phosphorous acid ester having two sulfur atom-containing groups in the same molecule (phosphorous acid diester) may be each used singly, or both of them may be used in combination, but from the viewpoint of obtaining a lubricating oil composition having been more improved in scuffing resistance, it is preferable to use the phosphorous acid monoester and the phosphorous acid diester in combination.

From the above viewpoint, the sulfur atom-containing group of the phosphorous acid ester of the component (B) is preferably a group represented by the following general formula (b-i).
[Chem. 2]

R^{b}-(S)ₓ-A^{b}-* (b-i)

In the general formula (b-i), R^{b} is a straight-chain or branched chain alkyl group, A^{b} is a straight-chain or branched chain alkylene group, the total number of carbon atoms of R^{b} and A^{b} is 2 to 20, x is an integer of 1 or more, and * represents a bonding position to a phosphorus atom.

The total number of carbon atoms of R^{b} and A^{b} is 2 to 20, but from the viewpoint of obtaining a lubricating oil composition having been more improved in scuffing resistance, it is preferably 3 to 18, more preferably 4 to 16, still more preferably 5 to 14, and still much more preferably 6 to 12.

x is an integer of 1 or more, but from the viewpoint of obtaining a lubricating oil composition having been more improved in copper corrosion resistance, it is preferably an integer of 1 to 10, more preferably an integer of 1 to 5, still more preferably an integer of 1 to 3, still much more preferably 1 or 2, and particularly preferably 1.

The number of carbon atoms of the alkyl group capable of being selected as R^{b} is preferably 1 to 18, more preferably 1 to 16, still more preferably 3 to 14, still much more preferably 4 to 12, and particularly preferably 6 to 10.

Examples of the alkyl groups capable of being selected as R^{b} include a methyl group, an ethyl group, a propyl group (n-propyl group, isopropyl group), a butyl group (n-butyl group, s-butyl group, t-butyl group, isobutyl group), a pentyl group, a hexyl group, a 2-ethylhexyl group, a heptyl group, an octyl group, a nonyl group, a decyl group, an undecyl group, a dodecyl group, tridecyl, a tetradecyl group, a hexadecyl group, and an octadecyl group.

The number of carbon atoms of the alkylene group capable of being selected as A^{b} is preferably 1 to 18, more preferably 1 to 16, more preferably 1 to 12, still more preferably 1 to 10, still more preferably 1 to 8, still much more preferably 1 to 6, and particularly preferably 2 to 4.

Examples of the alkylene groups capable of being selected as A^{b} include a methylene group, a 1,1-ethylene group, a 1,2-ethylene group, various propylene groups, such as 1,3-propylene, 1,2-propylene, and 2,2-propylene, various butylene groups, various pentylene groups, various hexylene groups, various heptylene groups, various octylene groups, various nonylene groups, various decylene groups, various undecylene groups, various dodecylene groups, various tridecylene groups, various tetradecylene groups, various pentadecylene groups, various hexadecylene groups, various heptadecylene groups, and various octadecylene groups.

The alkylene group capable of being selected as A^{b} is preferably a group represented by -(CH₂)ₙ- (n is an integer of 1 to 19, preferably an integer of 1 to 16, more preferably an integer of 1 to 12, still more preferably an integer of 1 to 10, still more preferably an integer of 1 to 8, still much more preferably an integer of 1 to 6, particularly preferably an integer of 2 to 4) among these.

As the phosphorous acid ester used as the component (B) in one embodiment of the present invention, a phosphorous acid ester represented by the following general formula (b-1) or (b-2) can be mentioned.

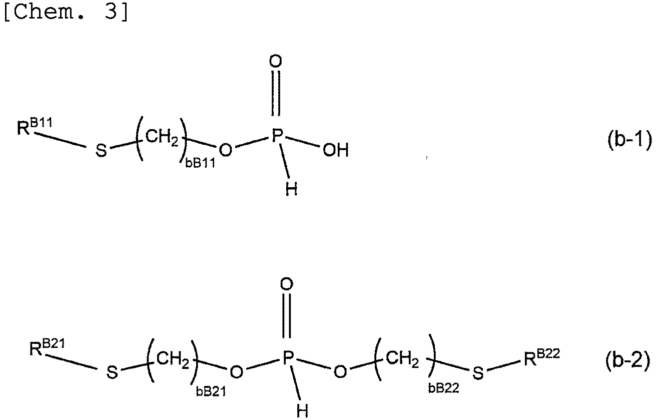

In the above formulae, R^{B11}, R^{B21}, and R^{B22} are each independently a straight-chain or branched chain alkyl group, and the numbers of carbon atoms thereof are each independently preferably 1 to 18, more preferably 1 to 16, still more preferably 3 to 14, still much more preferably 4 to 12, and particularly preferably 6 to 10.

bB11, bB21, and bB22 are each independently an integer of 1 to 10, preferably 1 to 19, more preferably 1 to 16, more preferably 1 to 12, still more preferably 1 to 10, still more preferably 1 to 8, still much more preferably 1 to 6, and particularly preferably 2 to 4.

The alkyl group capable of being selected as R^{B11}, R^{B21}, and R^{B22} is the same as the alkyl group capable of being selected as R^{B1} in the aforementioned general formula (b-i), and a preferred number of carbon atoms and specific groups are also the same.

The phosphorous acid ester used as the component (B) in one embodiment of the present invention may be in the form of an amine salt.

The amine to form an amine salt is preferably a compound represented by the following general formula (b-3). The amine may be used singly, or may be used in combination of two or more.
[Chem. 4]

(R^{x})ᵣ-N-(H)₃₋ᵣ (b-3)

In the general formula (b-3), r is an integer of 1 to 3, and is preferably 1.

Each R^{x} is independently an alkyl group having 6 to 18 carbon atoms, an alkenyl group having 6 to 18 carbon atoms, an aryl group having 6 to 18 carbon atoms, or a hydroxyalkyl group having 6 to 18 carbon atoms.

When multiple R^{x} are present, the multiple R^{x} may be the same as one another, or may be different from one another.

In the lubricating oil composition of one embodiment of the present invention, the total content of the component (B) based on the total amount (100 mass%) of the lubricating oil composition is preferably 0.15 mass% or more, more preferably 0.16 mass% or more, still more preferably 0.17 mass% or more, and particularly preferably 0.18 mass% or more, from the viewpoint of obtaining a lubricating oil composition having been more improved in scuffing resistance, and from the viewpoint of obtaining a lubricating oil composition having been more improved in copper corrosion resistance, it is preferably less than 1.00 mass%, more preferably 0.95 mass% or less, more preferably 0.90 mass% or less, still more preferably 0.85 mass% or less, still much more preferably 0.80 mass% or less, still much more preferably 0.75 mass% or less, still much more preferably 0.70 mass% or less, still much more preferably 0.65 mass% or less, still much more preferably 0.60 mass% or less, still much more preferably 0.55 mass% or less, still much more preferably 0.50 mass% or less, still much more preferably 0.45 mass% or less, and particularly preferably 0.40 mass% or less.

In the lubricating oil composition of one embodiment of the present invention, the component (B) preferably contains both the compound (B1) represented by the aforementioned general formula (b-1) and the compound (B2) represented by the aforementioned general formula (b-2), from the viewpoint of obtaining a lubricating oil composition having a good balance between scuffing resistance and copper corrosion resistance.

In one embodiment of the present invention, the content ratio [(B1)/(B2)] by mass of the compound (B1) to the compound (B2) is preferably 1/20 to 20/1, more preferably 1/18 to 18/1, still more preferably 1/16 to 16/1, still more preferably 1/14 to 14/1, still much more preferably 1/12 to 12/1, and particularly preferably 1/10 to 10/1.

From the above viewpoint, the content of the component (B) in terms of phosphorus atoms in the lubricating oil composition of one embodiment of the present invention is preferably 20 ppm by mass or more, more preferably 50 ppm by mass or more, more preferably 100 ppm by mass or more, still more preferably 120 ppm by mass or more, still more preferably 150 ppm by mass or more, still much more preferably 170 ppm by mass or more, and particularly preferably 200 ppm by mass or more, and is preferably 800 ppm by mass or less, more preferably 700 ppm by mass or less, still more preferably 600 ppm by mass or less, still much more preferably 500 ppm by mass or less, and particularly preferably 400 ppm by mass or less, based on the total amount (100 mass%) of the lubricating oil composition.

From the above viewpoint, the content of the component (B) in terms of sulfur atoms in the lubricating oil composition of one embodiment of the present invention is preferably 10 ppm by mass or more, more preferably 50 ppm by mass or more, more preferably 100 ppm by mass or more, still more preferably 150 ppm by mass or more, still more preferably 170 ppm by mass or more, still much more preferably 200 ppm by mass or more, and particularly preferably 230 ppm by mass or more, and is preferably 800 ppm by mass or less, more preferably 700 ppm by mass or less, still more preferably 600 ppm by mass or less, still much more preferably 500 ppm by mass or less, and particularly preferably 400 ppm by mass or less, based on the total amount (100 mass%) of the lubricating oil composition.

### <Thiadiazole compound>

In the lubricating oil composition of one embodiment of the present invention, the content of the thiadiazole compound is restricted to less than 0.05 mass% based on the total amount of the lubricating oil composition. If the content of the thiadiazole compound is 0.05 mass% or more, copper is black-tarnished in a copper corrosion test for a long time. The lubricating oil composition of one embodiment of the present invention can become a lubricating oil composition having been improved in scuffing resistance and copper corrosion resistance in a balanced manner by containing the component (B) while restricting the content of the thiadiazole compound as described above, and adjusting a kinematic viscosity of the lubricating oil composition at 100°C in a prescribed range.

In the lubricating oil composition of one embodiment of the present invention, the content of the thiadiazole compound is less than 0.05 mass%, more preferably less than 0.03 mass%, still more preferably less than 0.01 mass%, and particularly preferably less than 0.001 mass%, based on the total amount of the lubricating oil composition.

It is preferable for the lubricating oil composition of one embodiment of the present invention not to substantially contain a thiadiazole compound. Here, "not to substantially contain a thiadiazole compound" means to exclude a lubricating oil composition in which a thiadiazole compound has been intentionally added, and an embodiment in which a thiadiazole compound has been inevitably mixed is not even excluded, but the content of such a thiadiazole compound is preferably as small as possible. Specifically, the content of the thiadiazole compound inevitably mixed is less than 0.05 mass%, more preferably less than 0.03 mass%, still more preferably less than 0.01 mass%, and particularly preferably less than 0.001 mass%, based on the total amount of the lubricating oil composition.

In one embodiment of the present invention, as the thiadiazole compound, a compound having a thiadiazole ring can be mentioned, and it can be, for example, a compound represented by any one of the following general formulae (c-1) to (c-4).

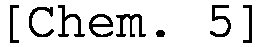

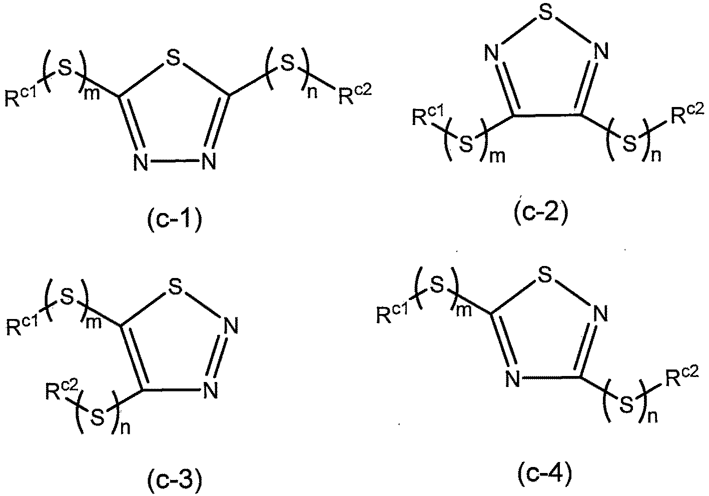

In the above formulae, R^{c1} and R^{c2} are each independently a hydrocarbon group.

m and n may be each independently an integer of 1 to 10, an integer of 1 to 6, an integer of 1 to 4, or an integer of 2 to 3.

Examples of the hydrocarbon groups capable of being selected as R^{c1} and R^{c2} include straight-chain or branched chain alkyl groups, such as a methyl group, an ethyl group, a propyl group (n-propyl group, isopropyl group), a butyl group (n-butyl group, s-butyl group, t-butyl group, isobutyl group), a pentyl group, a hexyl group, a heptyl group, an octyl group, a 2-ethylhexyl group, a nonyl group, a 1,1-dimethylheptyl group, a decyl group, an undecyl group, a dodecyl group, a tridecyl group, a tetradecyl group, a pentadecyl group, a hexadecyl group, a heptadecyl group and an octadecyl group; straight-chain or branched chain alkenyl groups, such as an ethenyl group, a propenyl group, a butenyl group, a pentenyl group, a hexenyl group, a heptenyl group, an octenyl group, a nonenyl group, a decenyl group, an undecenyl group, a dodecenyl group, a tridecenyl group, a tetradecenyl group and a pentadecenyl group; cycloalkyl groups which may have an alkyl group, such as a cyclohexyl group, a dimethylcyclohexyl group, an ethylcyclohexyl group, a propylcyclohexyl group, a butylcyclohexyl group and a heptylcyclohexyl group; aryl groups, such as a phenyl group, a naphthyl group, an anthracenyl group, a biphenyl group and a terphenyl group; alkylaryl groups, such as a tolyl group, a dimethylphenyl group, a butylphenyl group, a nonylphenyl group, a methylbenzyl group, and a dimethylnaphthyl group; and arylalkyl groups, such as a phenylmethyl group, a phenylethyl group and a diphenylmethyl group.

The number of carbon atoms of the hydrocarbon group capable of being selected as R^{c1} and R^{c2} may be 1 or more, 2 or more, 3 or more, or 5 or more, and may be 30 or less, 20 or less, 16 or less, or 12 or less.

### <Benzotriazole compound>

In the lubricating oil composition of one embodiment of the present invention, the content of the benzotriazole compound is restricted to less than 0.05 mass% based on the total amount of the lubricating oil composition. The lubricating oil composition of one embodiment of the present invention can become a lubricating oil composition having been improved in scuffing resistance and copper corrosion resistance in a balanced manner by containing the component (B) while restricting the content of the benzotriazole compound as described above, and adjusting a kinematic viscosity of the lubricating oil composition at 100°C in a prescribed range.

In the lubricating oil composition of one embodiment of the present invention, the content of the benzotriazole compound is less than 0.05 mass%, more preferably less than 0.03 mass%, still more preferably less than 0.01 mass%, and particularly preferably less than 0.001 mass%, based on the total amount of the lubricating oil composition.

It is preferable for the lubricating oil composition of one embodiment of the present invention not to substantially contain a benzotriazole compound. Here, "not to substantially contain a benzotriazole compound" means to exclude a lubricating oil composition in which a benzotriazole compound has been intentionally added, and an embodiment in which a benzotriazole compound has been inevitably mixed is not even excluded, but the content of such a benzotriazole compound is preferably as small as possible. Specifically, the content of the benzotriazole compound inevitably mixed is less than 0.05 mass%, more preferably less than 0.03 mass%, still more preferably less than 0.01 mass%, and particularly preferably less than 0.001 mass%, based on the total amount of the lubricating oil composition.

In one embodiment of the present invention, as the benzotriazole compound, a compound having a benzotriazole structure can be mentioned, and for example, a compound represented by the following general formula (d-0) can be mentioned.

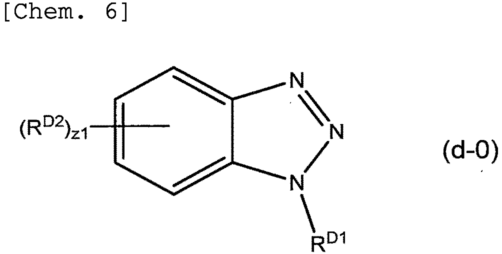

In the general formula (d-0), R^{D1} is a hydrocarbon group which may contain at least one atom selected from the group consisting of an oxygen atom, a sulfur atom, and a nitrogen atom, or a hydrogen atom.

Each R^{D2} is independently a hydrocarbon group which may contain at least one atom selected from the group consisting of an oxygen atom, a sulfur atom, and a nitrogen atom.

z1 may be an integer of 0 to 4, an integer of 0 to 2, or an integer of 0 to 1.

Examples of the hydrocarbon groups include an alkyl group, an alkenyl group, a cycloalkyl group, an aryl group, and a group of a combination of two or more of these groups.

The number of carbon atoms of the hydrocarbon group capable of being selected as R^{D1} is, for example, 1 to 30, but may be 3 to 26, or 6 to 20.

The number of carbon atoms of the hydrocarbon group capable of being selected as R^{D2} is, for example, 1 to 20, but may be 1 to 12, 1 to 6, or 1 to 2.

Examples of the alkyl groups include a methyl group, an ethyl group, a propyl group (n-propyl group, i-propyl group), a butyl group (n-butyl group, i-butyl group, s-butyl group, t-butyl group), a pentyl group (n-pentyl group, i-pentyl group, neopentyl group), a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, and an octadecyl group.

The alkyl group may be a straight-chain alkyl group, or may be a branched chain alkyl group.

Examples of the alkenyl groups include an ethenyl group (vinyl group), a propenyl group, a butenyl group, a pentenyl group, a hexenyl group, a heptenyl group, an octenyl group, a nonenyl group, a decenyl group, a dodecenyl group, a tridecenyl group, a tetradecenyl group, a pentadecenyl group, a hexadecenyl group, and an octadecenyl group (oleyl group).

The alkenyl group may be a straight-chain alkenyl group, or may be a branched chain alkenyl group.

Examples of the cycloalkyl groups include a cyclopropyl group, a cyclobutyl group, a cyclopentyl group, a cyclohexyl group, a cycloheptyl group, a cyclooctyl group, and an adamantyl group.

Examples of the aryl groups include a phenyl group, a naphthyl group, an anthryl group, a phenanthryl group, a biphenyl group, a terphenyl group, and a phenylnaphthyl group.

### <Various additives>

The lubricating oil composition of one embodiment of the present invention may contain various additives when needed as long as the effects of the present invention are not impaired.

Examples of such additives include a pour point depressant, a viscosity index improver, an antioxidant, a metal-based detergent, an ashless dispersant, an anti-rust agent, and an anti-foaming agent.

These lubricating oil additives may be each used singly, or may be each used in combination of two or more.

The contents of these various lubricating oil additives can be each appropriately adjusted as long as the effects of the present invention are not impaired, and the contents of the additives are each independently usually 0.001 to 15 mass%, preferably 0.005 to 10 mass%, and more preferably 0.01 to 8 mass%, based on the total amount (100 mass%) of the lubricating oil composition.

### [Pour point depressant]

The lubricating oil composition of one embodiment of the present invention may further contain a pour point depressant. The pour point depressant may be used singly, or may be used in combination of two or more.

Examples of the pour point depressants used in one embodiment of the present invention include an ethylenevinyl acetate copolymer, a condensate of chlorinated paraffin and naphthalene, a condensate of chlorinated paraffin and phenol, polymethacrylate, and polyalkylstyrene.

The mass-average molecular weight (Mw) of the pour point depressant used in one embodiment of the present invention may be 5,000 or more, 7,000 or more, 10,000 or more, 15,000 or more, 20,000 or more, 25,000 or more, 30,000 or more, 35,000 or more, 40,000 or more, 45,000 or more, 50,000 or more, 55,000 or more, or 60,000 or more, and it may be 150,000 or less, 120,000 or less, 100,000 or less, 90,000 or less, or 80,000 or less.

### [Viscosity index improver]

The lubricating oil composition of one embodiment of the present invention may further contain a viscosity index improver. The viscosity index improver may be used singly, or may be used in combination of two or more.

Examples of the viscosity index improvers used in one embodiment of the present invention include polymers, such as non-dispersion type polymethacrylate, dispersion type polymethacrylate, an olefin-based copolymer (for example, ethylene-propylene copolymer), a dispersion type olefin-based copolymer, and a styrene-based copolymer (for example, styrene-diene copolymer, styrene-isoprene copolymer).

The weight-average molecular weight (Mw) of the viscosity index improver used in one embodiment of the present invention may be 5,000 or more, 7,000 or more, 10,000 or more, 15,000 or more, or 20,000 or more, and it may be 1,000,000 or less, 700,000 or less, 500,000 or less, 300,000 or less, 200,000 or less, 100,000 or less, or 50,000 or less.

### [Antioxidant]

The lubricating oil composition of one embodiment of the present invention may further contain an antioxidant. The antioxidant may be used singly, or may be used in combination of two or more.

Examples of the antioxidants used in one embodiment of the present invention include amine-based antioxidants, such as alkylated diphenylamine, phenylnaphthylamine, and alkylated phenylnaphthylamine; phenol-based antioxidants, such as 2,6-di-t-butylphenol, 4,4'-methylenebis(2,6-di-t-butylphenol), isooctyl-3-(3,5-di-t-butyl-4-hydroxyphenyl)propionate, and n-octadecyl-3-(3,5-di-t-butyl-4-hydroxyphenyl)propionate; and sulfur-based antioxidants, such as phenothiazine, dioctadecyl sulfide, dilauryl-3,3'-thiodipropionate, and 2-mercaptobenzimidazole.

### [Metal-based detergent]

The lubricating oil composition of one embodiment of the present invention may further contain a metal-based detergent. The metal-based detergent may be used singly, or may be used in combination of two or more.

Examples of the metal-based detergents used in one embodiment of the present invention include metal salts, such as a metal sulfonate, a metal salicylate, and a metal phenate. The metal to constitute the metal salts is preferably a metal atom selected from alkali metals and alkaline earth metals, more preferably sodium, calcium, magnesium or barium, and still more preferably calcium.

In the lubricating oil composition of one embodiment of the present invention, the metal-based detergent preferably contains one or more selected from calcium sulfonate, calcium salicylate and calcium phenate, and more preferably contains calcium sulfonate.

The content of the calcium sulfonate is preferably 50 to 100 mass%, more preferably 60 to 100 mass%, still more preferably 70 to 100 mass%, and still much more preferably 80 to 100 mass%, based on the total amount (100 mass%) of the metal-based detergent contained in the lubricating oil composition.

The base number of the metal-based detergent is preferably 0 to 600 mgKOH/g.

In the lubricating oil composition of one embodiment of the present invention, however, the metal-based detergent is preferably an overbased metal-based detergent having a base number of 100 mgKOH/g or more.

The base number of the overbased metal-based detergent is 100 mgKOH/g or more, but it is preferably 150 to 500 mgKOH/g, and more preferably 200 to 450 mgKOH/g.

In the present specification, the "base number" means a base number measured by perchloric acid method in accordance with JIS K2501:2003 "Petroleum products and lubricants - Determination of neutralization number", 7.

### [Ashless dispersant]

From the viewpoint of improving dispersibility of the component (B), the lubricating oil composition of one embodiment of the present invention may further contain an ashless dispersant. The ashless dispersant may be used singly, or may be used in combination of two or more.

The ashless dispersant used in one embodiment of the present invention is preferably an alkenyl succinimide, and examples thereof include an alkenyl bis-succinimide represented by the following general formula (e-1) and an alkenyl mono-succinimide represented by the following general formula (e-2).

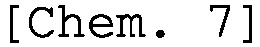

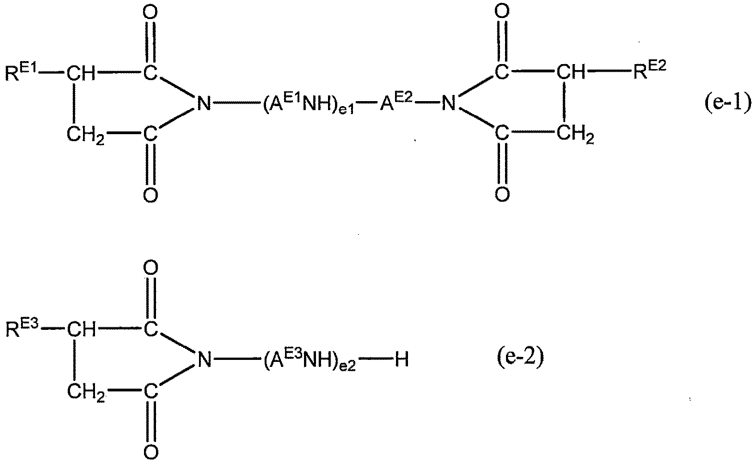

In the general formulae (e-1) and (e-2), R^{E1}, R^{E2}, and R^{E3} are each independently an alkenyl group having a mass-average molecular weight (Mw) of 500 to 3000 (preferably 900 to 2500).

Examples of the alkenyl groups capable of being selected as R^{E1}, R^{E2}, and R^{E3} include a polybutenyl group, a polyisobutenyl group, and an ethylene-propylene copolymer, and among these, a polybutenyl group or a polyisobutenyl group is preferable.

A^{E1}, A^{E2}, and A^{E3} are each independently an alkylene group having 2 to 5 carbon atoms.

e1 is an integer of 0 to 10, preferably an integer of 1 to 4, and more preferably 2 or 3.

e2 is an integer of 1 to 10, preferably an integer of 2 to 5, and more preferably 3 or 4.

The compound represented by the general formula (e-1) or (e-2) may be a modified alkenyl succinimide obtained by the reaction with one or more selected from a boron compound, an alcohol, an aldehyde, a ketone, an alkylphenol, a cyclic carbonate, an epoxy compound, an organic acid, and the like.

### [Anti-rust agent]

The lubricating oil composition of one embodiment of the present invention may further contain an anti-rust agent. The anti-rust agent may be used singly, or may be used in combination of two or more.

Examples of the anti-rust agents used in one embodiment of the present invention include a fatty acid, an alkenyl succinic acid half ester, a fatty acid soap, an alkyl sulfonic acid salt, a polyhydric alcohol fatty acid ester, a fatty acid amine, oxidized paraffin, and an alkyl polyoxyethylene ether.

### [Anti-foaming agent]

The lubricating oil composition of one embodiment of the present invention may further contain an anti-foaming agent. The anti-foaming agent may be used singly, or may be used in combination of two or more.

Examples of the anti-foaming agents used in one embodiment of the present invention include an alkyl silicone-based anti-foaming agent, a fluorosilicone-based anti-foaming agent, and a fluoroalkyl ether-based anti-foaming agent.

### <Method for producing lubricating oil composition>

The method for producing a lubricating oil composition of one embodiment of the present invention comprises a step of adding the component (B) to the component (A) and a step of preparing a lubricating oil composition so that a kinematic viscosity of the lubricating oil composition at 100°C is 4.2 mm²/s or more. The method for producing a lubricating oil composition of one embodiment of the present invention does not comprise a step of adding a thiadiazole compound. The method for producing a lubricating oil composition of another embodiment of the present invention does not comprise a step of adding a benzotriazole compound. The lubricating oil composition of a further embodiment of the present invention does not comprise a step of adding a thiadiazole compound and a benzotriazole compound.

The method for producing a lubricating oil composition of one embodiment of the present invention preferably has a step of adding other additives as needed.

Preferred compounds and amounts of the component (A), the component (B), and various additives are as previously described.

The additives, such as the viscosity index improver, the pour point depressant, and the anti-foaming agent, are each preferably added in a state of being dissolved in a diluent oil.

### [Properties of lubricating oil composition]

From the viewpoint of obtaining a lubricating oil composition having been more improved in scuffing resistance, the kinematic viscosity of the lubricating oil composition of one embodiment of the present invention at 100°C is preferably 4.2 mm²/s or more, more preferably 4.3 mm²/s or more, and still more preferably 4.4 mm²/s or more, and from the viewpoint of obtaining a lubricating oil composition having been improved in cooling properties, it is preferably 8.0 mm²/s or less, more preferably 7.5 mm²/s or less, still more preferably 7.0 mm²/s or less, still much more preferably 6.5 mm²/s or less, and particularly preferably 6.0 mm²/s or less.

The viscosity index of the lubricating oil composition of one embodiment of the present invention is preferably 90 or more, more preferably 100 or more, still more preferably 110 or more, still much more preferably 120 or more, and particularly preferably 130 or more.

### [Use application of lubricating oil composition]

The lubricating oil composition of one preferred embodiment of the present invention can be improved in scuffing resistance and copper corrosion resistance in a balanced manner.

Taking such characteristics into consideration, the lubricating oil composition of one embodiment of the present invention can be preferably used for lubrication in mechanisms, such as a torque converter, a wet clutch, a gear bearing mechanism, an oil pump and a hydraulic control mechanism, which are incorporated in various apparatuses, such as an engine, a transmission, a speed reducer, a compressor and a hydraulic system.

The lubricating oil composition of one embodiment of the present invention is preferably used for lubrication of various mechanisms of an electrically driven unit including at least a gearbox and an electric motor, among these. The electrically driven unit is mounted on fuel-cell-powered vehicles, electric vehicles, and hybrid vehicles.

When the lubricating oil composition of one embodiment of the present invention is applied to the electrically driven unit, the lubricating oil composition plays a role in cooling of an electric motor and lubrication of a gearbox. Particularly, the lubricating oil composition of one embodiment of the present invention also has such characteristics that since it is excellent in scuffing resistance and copper corrosion resistance, it improves lubrication properties of a gearbox, and since it has excellent copper corrosion resistance, it can prevent corrosion of a copper-based member for constituting an electric motor even if it is used for cooling the electric motor.

When the aforementioned characteristics of the lubricating oil composition of one embodiment of the present invention are taken into consideration, the present invention can also provide the following [1] and [2].
[1] An electrically driven unit filled with the aforementioned lubricating oil composition of one embodiment of the present invention, and comprising at least a gearbox and an electric motor.
[2] Use of a lubricating oil composition, in which the lubricating oil composition of one embodiment of the present invention is applied to an electrically driven unit comprising at least a gearbox and an electric motor.

Preferred embodiments of the lubricating oil composition described in the above [1] and [2] are as previously described.

### Examples

Next, the present invention will be described in much more detail with reference to Examples, but the present invention is in no way limited to these Examples. Measuring methods for various properties are as follows.

### (1) Kinematic viscosity, viscosity index

The kinematic viscosity and viscosity index were measured and calculated in accordance with JIS K2283:2000.

### (2) Content of phosphorus atoms

The content was measured in accordance with JPI-5S-38-92.

### (3) Content of sulfur atoms

The content was measured in accordance with JIS K2541-6:2013.

### Examples 1 to 3, Comparative Examples 1 to 5

The components (A) and (B) and other additives shown in Table 1 were added in amounts shown in Table 2, and they were sufficiently mixed to prepare each lubricating oil composition. Details of each component used in the preparation of the lubricating oil composition are as follows. Each of the lubricating oil compositions of Examples 1 to 3 did not contain a benzotriazole compound.

### <Component (A)>

"Mineral oil (a1)": 70N mineral oil classified into Group II of API base oil categories, 100°C kinematic viscosity = 3.1 mm²/s, viscosity index = 109.

"Mineral oil (a2)": 100N mineral oil classified into Group III of API base oil categories, 100°C kinematic viscosity = 4.2 mm²/s, viscosity index = 122.

### <Component (B)>

"Phosphorous acid ester (b)": mixture of sulfur atom-containing phosphorous acid ester compounds obtained by mixing a compound corresponding to the component (B1) of the aforementioned general formula (b-1) wherein R^{B11} is a n-octyl group (-C₈H₁₇), and bB11 is 2 (1,2-ethylene group (-C₂H₄-)) (compound represented by the following formula (b-1-1)) and a compound corresponding to the component (B2) of the aforementioned general formula (b-₂) wherein R^{B11} and R^{B22} are each a n-octyl group (-C₈H₁₇), and bB11 and bB22 are each 2 (1,2-ethylene group (-C₂H₄-)) (compound represented by the following formula (b-2-1)), in a component (B1)/component (B2) ratio = 9/1 (by mass); sulfur atom content = 10.7 mass%, phosphorus atom content = 10 mass%.

### <Additives other than components (A) and (B)>

Extreme pressure agent: thiadiazole (2,5-bis(1,1-dimethylheptyldithio)-1,3,4-thiadiazole, thiadiazole of the aforementioned general formula (c-1) wherein m = n = 2, and R^{c1} and R^{c2} are each a 1,1-dimethylheptyl group (compound represented by the following formula (c-1-1)).

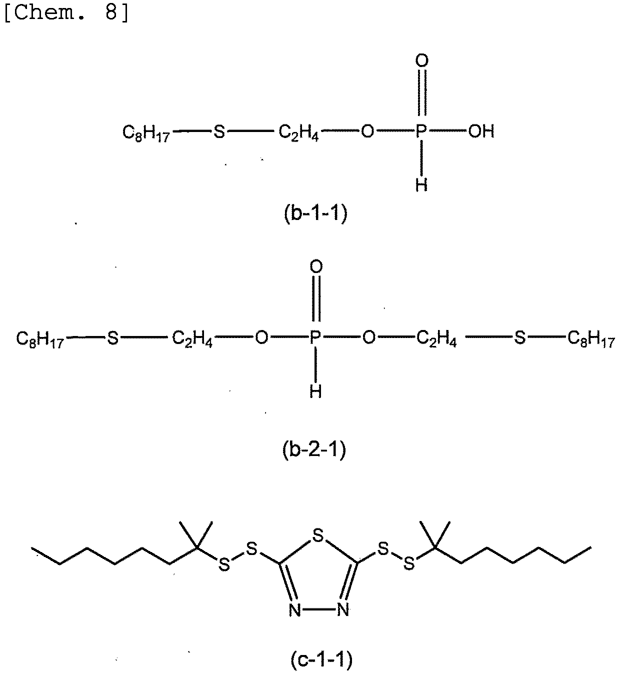

### Extreme pressure agent: tritolyl phosphate.

Viscosity index improver: polymethacrylate-based viscosity index improver (content in terms of resin content: 0.13 mass%).

"Additive mixture": additive mixture obtained by mixing an antioxidant, a metal-based detergent, an ashless dispersant, a pour point depressant, and an anti-foaming agent and diluting the resulting mixture with 70N hydrocracked mineral oil.

Regarding the lubricating oil compositions prepared, the kinematic viscosity and viscosity index were measured or calculated, and the following test was carried out. The results of them are set forth in Table 1.

### (1) FZG scuffing test (A10/16.6R/90)

A load was stepwise increased based on the regulations using an A10 type gear under the conditions of a sample oil temperature of 90°C, a rotational speed of 2900 rpm and an operating time of about 7.5 minutes in accordance with ASTM D5182, and when scuffing occurred, a stage of the load was determined. It can be said that the larger the value of the stage is, the better the scuffing resistance of the lubricating oil composition becomes.

### (2) Copper corrosion resistance test

Copper strip corrosion test was carried out under the conditions of a test temperature of 150°C and a test time of 168 hours in accordance with a test tube method of JIS K2513 "Petroleum products - Corrosiveness to copper - Copper strip test", then a state of tarnish of the copper strip was observed, and the copper corrosion resistance in a liquid phase was evaluated based on "Table 1 - Classification of corrosion standards" of JIS K 2513 shown in Table 1 below. In Table 2, the result is described as "classification number (subdivision symbol)", and regarding the classification number, a smaller number indicates lower copper corrosion resistance, and the degree of corrosion progress is shown in alphabetical order.

### [Table 1]

**Table 1**

| Classification | Designation | Description | |
|---|---|---|---|
| Freshly polished strip | - | | The freshly polished strip is included in the series only as an indication of the appearance of a properly polished strip before a test run. It is not possible to duplicate this appearance after a test run with a completely non-corrosion sample. |
| 1 | Slight tarnish | (a) | Light orange, almost the same as a freshly polished strip |
| | | (b) | Dark orange |
| 2 | Moderate tarnish | (a) | Claret red |
| | | (b) | Lavender |
| | | (c) | Multicoloured with lavender blue and/or silver overlaid on claret red |
| | | (d) | Silvery |
| | | (e) | Brassy or gold |
| 3 | Dark tarnish | (a) | Magenta overcast on brassy strip |
| | | (b) | Multicoloured with red and green showing (peacock), but no grey |
| 4 | Corrosion | (a) | Transparent black, dark grey or brown with peacock green barely showing |
| | | (b) | Graphite or lustreless black |
| | | (c) | Glossy or jet black |

### [Table 2]

**Table 2**

| | | | | Exam ple 1 | Exam ple 2 | Exam ple 3 | Comp arative Exam ple 1 | Comp arative Exam ple 2 | Comp arative Exam ple 3 | Comp arative Exam ple 4 | Comp arative Exam ple 5 |
|---|---|---|---|---|---|---|---|---|---|---|---|
| Formul ation of Lubric ating oil compo sition | Comp onent (A) | Mineral oil (a1) | mass % | | | | 75.00 | 30.00 | | | |
| | | Mineral oil (a2) | mass % | 91.70 | 91.82 | 97.50 | 22.50 | 67.50 | 91.64 | 91.10 | 91.69 |
| | Comp onent (B) | Phosphorous acid ester (b-1) | mass % | 0.27 | 0.16 | 0.27 | 0.27 | 0.27 | 0.27 | 0.27 | |
| | | Phosphorous acid ester (b-2) | mass % | 0.03 | 0.02 | 0.03 | 0.03 | 0.03 | 0.03 | 0.03 | |
| | Other additi ves | Extreme pressure agent (thiadiazole) | mass % | | | | | | 0.06 | 0.60 | |
| | | Extreme pressure agent (tritolyl phosphate) | mass % | | | | | | | | 0.31 |
| | | Viscosity index improver | mass % | 5.80 | 5.80 | | | | 5.80 | 5.80 | 5.80 |
| | | Additive mixture | mass % | 2.20 | 2.20 | 2.20 | 2.20 | 2.20 | 2.20 | 2.20 | 2.20 |
| | Total | | mass % | 100.00 | 100.00 | 100.00 | 100.00 | 100.00 | 100.00 | 100.00 | 100.00 |
| Proper ties of Lubric ating oil compo sition | 100°C kinematic viscosity of lubricating oil composition | | mm²/ s | 5.3 | 5.3 | 4.4 | 3.5 | 4.0 | 5.3 | 5.3 | 5.3 |
| | Viscosity index | | - | 160 | 160 | 131 | 127 | 129 | 160 | 160 | 160 |
| Test results | FZG scuffing test, stage | | - | 8 | 8 | 8 | 4 | 6 | 9 | 10 | 4 |
| | Copper strip corrosion test, appearance | | - | 2(d) | 2(d) | 2(d) | 2(d) | 2(d) | 3(b) | 4(c) | 2(d) |

From Table 2, the results for the lubricating oil compositions prepared in Examples 1 to 3 were superior not only in scuffing resistance but also in copper corrosion resistance. In contrast, the results for Comparative Examples 1, 2, and 5 were inferior in scuffing resistance though the results were good in copper corrosion resistance. The results for Comparative Examples 3 and 4 were inferior in copper corrosion resistance though the results were good in scuffing resistance.

## Claims

1. A lubricating oil composition comprising a base oil (A) and a phosphorous acid ester (B) having at least one sulfur atom-containing group having 2 to 20 carbon atoms, the sulfur atom-containing group having at least one - (S)ₓ- group (x is an integer of 1 or more) between two adjacent carbon atoms in a structure of an alkyl group, wherein
a content of a thiadiazole compound is less than 0.05 mass% based on the total amount of the lubricating oil composition, and
a kinematic viscosity of the lubricating oil composition at 100°C is 4.2 mm²/s or more.

2. The lubricating oil composition according to claim 1, wherein the phosphorous acid ester (B) comprises at least one selected from a compound (B1) represented by the following general formula (b-1) and a compound (B2) represented by the following general formula (b-2): 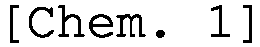 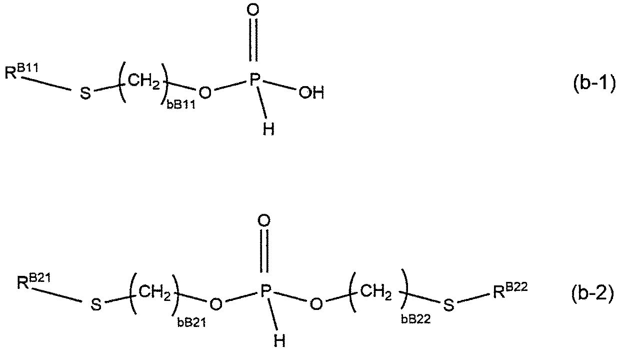 wherein R^{B11}, R^{B21}, and R^{B22} each independently represent an alkyl group having 1 to 19 carbon atoms, and b^{B11}, b^{B21}, and b^{B22} each independently represent an integer of 1 to 10.

3. The lubricating oil composition according to claim 1 or 2, wherein a content of a benzotriazole compound is less than 0.05 mass% based on the total amount of the lubricating oil composition.

4. The lubricating oil composition according to any one of claims 1 to 3, wherein a content of the phosphorous acid ester (B) is 0.15 mass% or more and less than 1.00 mass% based on the total amount of the lubricating oil composition.

5. The lubricating oil composition according to any one of claims 1 to 4, wherein the base oil (A) is one or more selected from the group consisting of mineral oil, poly-α-olefin, isoparaffin, polyalkylene glycol, an ester-based synthetic oil, an ether-based synthetic oil, an alkylbenzene-based synthetic oil, an alkylnaphthalene-based synthetic oil, GTL, CTL, and BTL.

6. The lubricating oil composition according to any one of claims 1 to 5, being used for lubrication of an electrically driven unit comprising at least a gearbox and an electric motor.

7. An electrically driven unit filled with the lubricating oil composition according to any one of claims 1 to 5, and comprising at least a gearbox and an electric motor.

8. Use of a lubricating oil composition, wherein the lubricating oil composition according to any one of claims 1 to 5 is applied to lubrication of an electrically driven unit comprising at least a gearbox and an electric motor.

9. A method for producing the lubricating oil composition according to any one of claims 1 to 5, comprising
adding, to a base oil (A), a phosphorous acid ester (B) having at least one sulfur atom-containing group having 2 to 20 carbon atoms, the sulfur atom-containing group having at least one -(S)ₓ- group (x is an integer of 1 or more) between two adjacent carbon atoms in a structure of an alkyl group, and
preparing a lubricating oil composition so that a content of a thiadiazole compound is less than 0.05 mass% based on the total amount of the lubricating oil composition, and a kinematic viscosity of the lubricating oil composition at 100°C is 4.2 mm²/s or more.
